# EUROPÄISCHE PATENTANMELDUNG

(11) **EP 4 779 599 A1**
(43) Veröffentlichungstag der Anmeldung: **22.07.2026**
(21) Anmeldenummer: 25152999.6
(22) Anmeldetag: 21.01.2025
(51) Int. Cl.: G07C 3/00, B25F 5/00, G05B 19/406, H02J 7/00

(54) **VERFAHREN ZUM STEUERN UND REGELN EINES SYSTEMS**

(71) Anmelder: Hilti Aktiengesellschaft, 9494 Schaan (LI)
(72) Erfinder: Lupper, Alfred, 86482 Aystetten (DE); Esquius-Serra, Marc, 6700 Bludenz (AT)
(74) Vertreter: Hilti Aktiengesellschaft Corporate Intellectual Property

(57) **Zusammenfassung**

Verfahren zum Steuern und Regeln eines Systems mit wenigstens einem Akkumulator und einer mit dem wenigstens einen Akkumulator betreibbaren Vorrichtung, beispielsweise eine Werkzeugmaschine, wobei der wenigstens eine Akkumulator wenigstens einen Transceiver, wenigstens einen Sensor sowie eine Speichereinheit und die Vorrichtung wenigstens einen Sensor, einen Transceiver sowie eine Speichereinheit enthält.

Des Weiteren betrifft die Erfindung ein System zur Durchführung des Verfahrens.

## Beschreibung

Die vorliegende Erfindung betrifft ein Verfahren zum Steuern und Regeln eines Systems mit wenigstens einem Akkumulator und einer mit dem wenigstens einen Akkumulator betreibbaren Vorrichtung, beispielsweise eine Werkzeugmaschine, wobei der wenigstens eine Akkumulator wenigstens einen Transceiver, wenigstens einen Sensor sowie eine Speichereinheit und die Vorrichtung wenigstens einen Sensor, einen Transceiver sowie eine Speichereinheit enthält.

Des Weiteren betrifft die Erfindung ein System zur Durchführung des Verfahrens.

Akkubetriebene Vorrichtungen, wie beispielsweise Werkzeugmaschine (z.B. Bohrhammer, Sägen, Schleifgeräte, Schrauber oder dergleichen), Sauvorrichtungen (z.B. Staubsauger), Lampen, Exoskelette oder dergleichen, erzeugen während ihrer Verwendung eine Menge an Daten und Informationen. Zum Erfassen dieser Daten und Informationen weisen Werkzeugmaschinen häufig unterschiedliche Sensoren auf.

Die Auswertung dieser Daten und Informationen sind oftmals bedeutsam für die bestimmungsgemäße Verwendung, rechtzeitige Instandsetzung und/oder ordnungsgemäße Funktionalität derartiger Vorrichtungen. Das tatsächliche Einsammeln und Auswerten dieser Daten findet jedoch erst statt, wenn die entsprechende Werkzeugmaschine in eine Serviceeinrichtung eingeliefert worden ist.

Problematisch ist hieran, dass mit den bisher vorhandenen Verfahren zwischen dem Erfassen der Daten und dem Auswerten der Daten zu viel Zeit vergeht. Hierdurch verlieren die erfassten Daten an Relevanz und werden ggf. unbrauchbar.

Aufgabe der vorliegenden Erfindung ist das vorstehend beschriebene Problem zu lösen.

Die Aufgabe wird ebenfalls gelöst durch den Gegenstand des Anspruchs 1 sowie durch den Gegenstand des Anspruchs 14.

Weitere vorteilhafte Ausführungen der Erfindung sind in den entsprechenden Unteransprüchen beschrieben.

Die Aufgabe wird insbesondere gelöst durch ein Verfahren zum Steuern und Regeln eines Systems mit wenigstens einem Akkumulator und einer mit dem wenigstens einen Akkumulator betreibbaren Vorrichtung, beispielsweise eine Werkzeugmaschine, wobei der wenigstens eine Akkumulator wenigstens einen Transceiver, wenigstens einen Sensor sowie eine Speichereinheit und die Vorrichtung wenigstens einen Sensor, einen Transceiver sowie eine Speichereinheit enthält.

Erfindungsgemäß sind die folgenden Verfahrensschritte vorgesehen
- Erfassen wenigstens eines Kennwertes durch den wenigstens einen Sensor des Akkumulators und/oder durch den wenigstens einen Sensor der Vorrichtung;
- Senden der von dem wenigstens einen Sensor der Vorrichtung erfassten Daten an den Akkumulator;
- Senden der erfassten Daten an eine erste Sende- und Empfangseinrichtung, wenn der Transceiver des Akkumulator mit der ersten Sende- und Empfangseinrichtung verbunden ist, oder Senden der erfassten Daten an eine zweite Sende- und Empfangseinrichtung, wenn der Transceiver des Akkumulator mit der zweiten Sende- und Empfangseinrichtung verbunden ist; und
- Senden der erfassten Daten von der ersten und/oder zweiten Sende- und Empfangseinrichtung an eine Datenspeicher- und Rechenvorrichtung.

Die Datenspeicher- und Rechenvorrichtung kann dabei auch als Cloud bzw. Cloud-Rechner bezeichnet werden.

Gemäß einer vorteilhaften Ausführungsform kann der Verfahrensschritt enthalten sein:
- Senden wenigstens eines Datensatzes von der Datenspeicher- und Rechenvorrichtung über die erste und/oder zweite Sende- und Empfangseinrichtung an den Akkumulator, wenn die empfangenen Daten wenigstens einem in der Datenspeicher- und Rechenvorrichtung gespeicherten Schwellwert entsprechen.

Entsprechend einer weiteren vorteilhaften Ausführungsform kann der Verfahrensschritt enthalten sein:
- Senden des wenigstens einen Datensatzes von dem Akkumulator an die Vorrichtung zum Ersetzen der entsprechenden Daten, wenn die empfangenen Daten wenigstens einem in der Datenspeicher- und Rechenvorrichtung gespeicherten Schwellwert entsprechen.

Gemäß einer weiteren vorteilhaften Ausführungsform kann der Verfahrensschritt enthalten sein:
- Senden wenigstens eines Datensatzes von der Datenspeicher- und Rechenvorrichtung über die erste und/oder zweite Sende- und Empfangseinrichtung an den Akkumulator nach Ablauf einer ersten oder zweiten Zeitdauer.

So ist es möglich, dass beispielsweise in regelmäßigen oder unregelmäßigen Zeitabständen (z.B. alle 30 Tage) eine neue fest zu implementierende Software (d.h. Firmware) gesendet wird.

Entsprechend einer weiteren vorteilhaften Ausführungsform kann der Verfahrensschritt enthalten sein:
- Markieren der erfassten Daten durch einen Zeitnachweis mittels einer Echtzeituhr.

Gemäß einer weiteren vorteilhaften Ausführungsform kann der Verfahrensschritt enthalten sein:
- Markieren der erfassten Daten durch einen Herkunftsnachweis.

Ein Herkunftsnachweis kann beispielsweise in Form einer Geräte-Identifikationsnummer erfolgen. Darüber hinaus können auch GPS-Daten als Herkunftsnachweis dienen.

Entsprechend einer weiteren vorteilhaften Ausführungsform kann der Verfahrensschritt enthalten sein:
- Senden wenigstens eines ersten und zweiten Signals durch den Akkumulator zum Anzeigen einer Sende- und Empfangseinrichtung, dass der Akkumulator zum Senden von Daten an die Sende- und Empfangseinrichtung und/oder zum Empfangen von Daten von der Sende- und Empfangseinrichtung bereit ist.

Der Akkumulator kann hierdurch als sogenannter Beacon (= Leuchtfeuer oder Signalstation) agieren.

Gemäß einer weiteren vorteilhaften Ausführungsform kann der Verfahrensschritt enthalten sein:
- Speichern der erfassten Daten in einer Speichereinheit der Vorrichtung vor dem Senden der erfassten Daten an den Akkumulator.

Hierdurch können erfasste Daten sicherheitshalber gesichert werden, wenn entweder kein Akkumulator mit der Werkzeugmaschine verbunden ist oder wenn der Akkumulator nicht bereit ist zum Aufnehmen und Speichern der Daten von der Werkzeugmaschine.

Entsprechend einer weiteren vorteilhaften Ausführungsform kann der Verfahrensschritt enthalten sein:
- Speichern wenigstens eines Anteils der erfassten oder empfangenen Daten in einer Speichereinheit des Akkumulators vor dem Aussenden der erfassten Daten an eine Sende- und Empfangseinrichtung.

Hierdurch können erfasste Daten sicherheitshalber gesichert werden, wenn entweder keine Sende- und Empfangseinrichtung vorhanden ist oder wenn die Sende- und Empfangseinrichtung nicht bereit ist zum Aufnehmen und Speichern der Daten.

Gemäß einer weiteren vorteilhaften Ausführungsform kann der Verfahrensschritt enthalten sein:
- Bearbeiten/Abändern wenigstens eines Anteils der erfassten oder empfangenen Daten durch den Akkumulator.

Bearbeiten beinhaltet das Abändern sowie Erweitern wenigstens eines Anteils der erfassten oder empfangenen Daten durch den Akkumulator. Erweitern beinhaltet das Hinzufügen wenigstens einer zusätzlichen Information zu wenigstens einem Anteil der erfassten oder empfangenen Daten durch den Akkumulator.

Entsprechend einer weiteren vorteilhaften Ausführungsform kann der Verfahrensschritt enthalten sein:
- Senden wenigstens einer ersten Teilmenge der erfassten Daten an eine erste Sende- und Empfangseinrichtung sowie Senden wenigstens einer zweiten Teilmenge der erfassten Daten an eine zweite Sende- und Empfangseinrichtung.

Gemäß einer weiteren vorteilhaften Ausführungsform kann der Verfahrensschritt enthalten sein:
- Senden wenigstens einer ersten Teilmenge der erfassten Daten von einer ersten Sende- und Empfangseinrichtung (z.B. Akku-Lader) an eine Datenspeicher- und Rechenvorrichtung (= Cloud) zu einem ersten Zeitpunkt sowie Senden wenigstens einer zweiten Teilmenge der erfassten Daten an eine Datenspeicher- und Rechenvorrichtung (= Cloud) zu einem zweiten Zeitpunkt.

Entsprechend einer weiteren vorteilhaften Ausführungsform kann der Verfahrensschritt enthalten sein:
- Abgleichen der erfassten Daten mit in der Speichereinheit des Akkumulators hinterlegten Prioritätsdaten; und
- Aussenden einer ersten Datenmenge entsprechend einer ersten Priorität und Aussenden einer zweiten Datenmenge entsprechend einer zweiten Priorität.

Die Aufgabe wird des Weiteren gelöst durch ein System zur Durchführung des Verfahrens.

Gemäß einer vorteilhaften Ausführungsform kann es möglich sein, dass die erste und/oder zweite Sende- und Empfangseinrichtung als Bestandteil einer Ladevorrichtung, eines Smartphones, einer Gateway-Vorrichtung oder einer Basisstation einer Übertragungseinrichtung für Funksignale ausgestaltet ist.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine Seitenansicht auf eine als Werkzeugmaschine ausgestaltete Vorrichtung mit einem angeschlossenen Akkumulator gemäß einer ersten beispielhaften Ausführungsform;

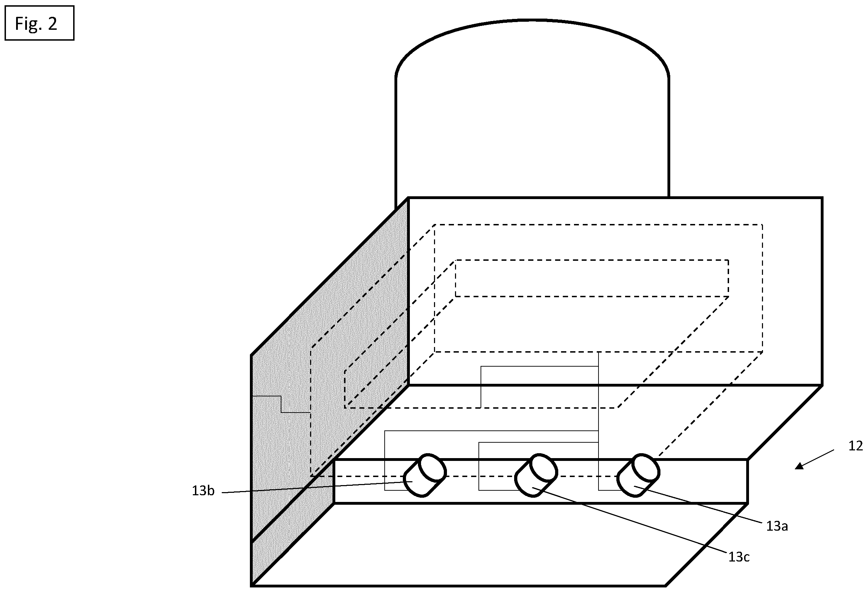

- Figur 2: eine perspektivische Ansicht auf eine Schnittstellenvorrichtung der Werkzeugmaschine;

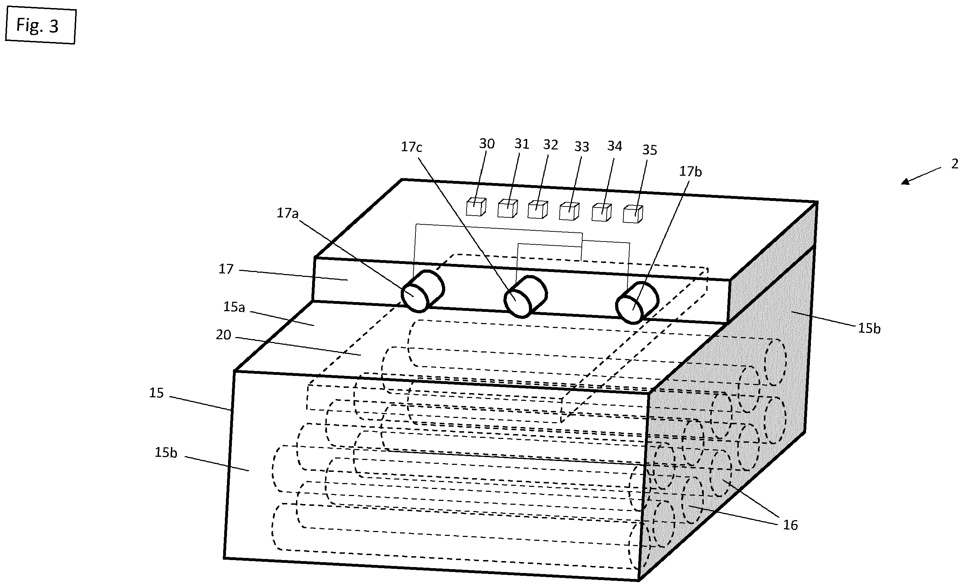

- Figur 3: eine perspektivische Ansicht auf einen Akkumulator und insbesondere auf eine Akkumulator-Schnittstelle;
- Figur 4: eine perspektivische Ansicht auf eine Ladevorrichtung;
- Figur 5: eine schematische Ansicht auf ein System mit einer Werkzeugmaschine verbunden mit einem Akkumulator und eine Ladevorrichtung, mit welcher der Akkumulator verbunden werden kann, sowie eine Datenspeicher- und Rechenvorrichtung;
- Figur 6: eine schematische Ansicht auf ein System mit einer Werkzeugmaschine verbunden mit einem ersten Akkumulator, eine zweiter Akkumulator sowie eine Ladevorrichtung mit einer Sende- und Empfangseinrichtung;
- Figur 6a: eine schematische Ansicht auf einen ersten und zweiten Akkumulator drahtlos verbunden mit einer Ladevorrichtung;
- Figur 6b: eine schematische Ansicht auf ein System mit einer Werkzeugmaschine verbunden mit einem Akkumulator sowie ersten und zweiten Sende- und Empfangseinrichtung;
- Figur 7: eine schematische Ansicht auf ein System mit einer Werkzeugmaschine verbunden mit einem Akkumulator sowie eine als Smartphone ausgestaltet Sende- und Empfangseinrichtung;
- Figur 8: eine schematische Ansicht auf ein System mit einer Werkzeugmaschine verbunden mit einem Akkumulator sowie eine erste als Smartphone ausgestaltet Sende- und Empfangseinrichtung sowie eine zweite als Basisstation ausgestaltete Sende- und Empfangseinrichtung;
- Figur 9: eine schematische Ansicht auf ein System mit einer Werkzeugmaschine verbunden mit einem Akkumulator sowie eine als Basisstation ausgestaltete Sende- und Empfangseinrichtung;
- Figur 10: eine schematische Ansicht auf ein System mit einer Werkzeugmaschine verbunden mit einem Akkumulator sowie eine Gateway-Einrichtung.

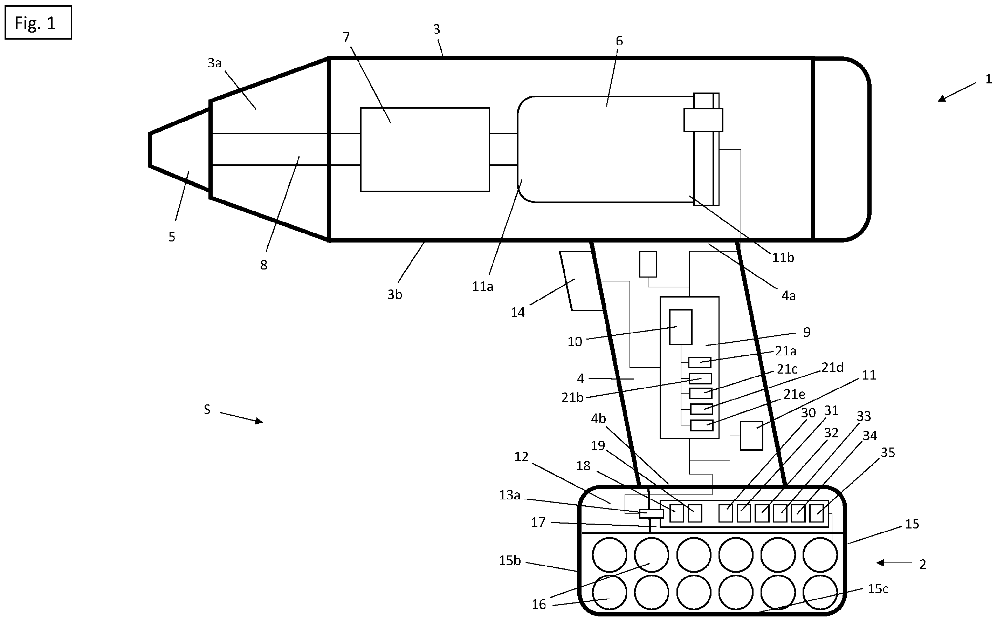

Figur 1 zeigt ein beispielhaftes System S enthaltend eine Vorrichtung 1 und einen mit der Vorrichtung 1 verbundenen Akkumulator 2.

Gemäß dem Ausführungsbeispiel in Figur 1 ist die Vorrichtung 1 in Form einer Werkzeugmaschine ausgestaltet. Bei dieser Werkzeugmaschine handelt es sich um einen Akku-Schrauber.

Alternativ kann die Werkzeugmaschine 1 auch als Bohrhammer, Bohrmaschine, Säge, Schleifgerät oder dergleichen ausgestaltet sein.

Die als Werkzeugmaschine ausgestaltete Vorrichtung 1 enthält im Wesentlichen ein Gehäuse 3, einen Handgriff 4 und eine Werkzeugaufnahme 5. Im Inneren des Gehäuses 3 ist ein Antrieb 6 in Form eines bürstenlosen Elektromotors, eine Getriebevorrichtung 7, eine Abtriebswelle 8, eine Steuerungseinheit 9, eine Speichereinheit 10, eine Anzahl an Sensoren 21a, 21b, 21c, 21d, 21e und einen Transceiver 11 positioniert.

Der Transceiver kann auch als Sende- und Empfangseinrichtung von elektrischen Signalen bezeichnet werden.

Der als Elektromotor ausgestaltete Antrieb 6, die Getriebevorrichtung 7 und die Abtriebswelle 8 sind dabei so zueinander angeordnet, dass ein von dem Elektromotor 6 erzeugtes Drehmoment über die Abtriebswelle 8 und die Getriebevorrichtung 7 auf die Werkzeugaufnahme 5 übertragbar ist. Die Werkzeugaufnahme 5 ist dazu an einem vorderen Ende 3a des Gehäuses 3 positioniert und zum Aufnehmen sowie Halten eines Werkzeug.

Im Ausführungsfall eines Akku-Schraubers kann das Werkzeug als Schrauber-Bit ausgestaltet sein. In den Figuren ist das Werkzeug nicht dargestellt.

An einer Unterseite 3b des Gehäuses 3 ist der Handgriff 4 positioniert. Der Handgriff 4 ist dabei mit einem ersten Ende 4a an der Unterseite 3b des Gehäuses 3 befestigt. An einem zweiten Ende 4b des Handgriffs 4 ist eine Werkzeugmaschinenschnittstelle 12 positioniert und dient zum elektrischen bzw. elektronischen sowie mechanischen Verbinden der Werkzeugmaschine 1 mit dem Akkumulator 2. Zum elektrischen bzw. elektronischen Verbinden weist die Werkzeugmaschine 1 einen Pluskontakt 13a, einen Minuskontakt 13b und einen Kommunikationskontakt 13c auf. Der Plus- und Minuskontakt 13a, 13b dient zur Erzeugen eines Stromkreises, wenn der Akkumulator 2 mit der Werkzeugmaschine 1 verbunden ist. Der Kommunikationskontakt 13c dient zum Senden und Empfangen von Daten sowie Informationen in Form von elektrischen Signalen.

An einem vorderen Ende 4c des Handgriffs 4 ist ein Betätigungsschalter 14 vorgesehen. Der Betätigungsschalter 14 dient zum Aktivieren des Werkzeugmaschine 1.

Im Inneren des Handgriffs 4 ist die Steuerungseinheit 9 mit dem Transceiver 11, die Sensoren 21a, 21b, 21c, 21d, 21e und die Speichereinheit 10 positioniert. Mit Hilfe der Steuerungseinheit 9 werden die einzelnen Funktionen der Werkzeugmaschine 1 gesteuert und geregelt. Zu den Funktionen gehört beispielsweise das Einstellen einer bestimmten Drehzahl des Elektromotors 6.

Bei den Sensoren 21a, 21b, 21c, 21d, 21e der Werkzeugmaschine 1 handelt es sich um einen Sensor 21a zum Erfassen eines Stromstärkewertes, einen Sensor 21b zum Erfassen eines Spannungswertes, einen Sensor 21c zum Erfassen der Betriebszeit der Werkzeugmaschine 1, einen Sensor 21d zum Erfassen eines Orientierungswertes der Werkzeugmaschine 1 in einem freien Raum sowie einen Sensor 21e zum Erfassen eines Temperaturwertes.

Der Orientierungssensor 2d kann dabei als Gyrosensor ausgestaltet sein.

Der Sensor 21c zum Erfassen der Betriebszeit der Werkzeugmaschine 1 kann dabei als Echtzeituhr (auch als Real Time Clock (RTC) bekannt) ausgestaltet sein.

Der Sensor 21a zum Erfassen eines Stromstärkewertes, der Sensor 21b zum Erfassen eines Spannungswertes und der Sensor 21e zum Erfassen eines Temperaturwertes dienen zum Erfassen von Messwerten des Antriebs 6.

Der Akkumulator 2 kann mit einer Werkzeugmaschine 1 wiederlösbar verbunden werden, um die Werkzeugmaschine 1 mit elektrischer Energie zu versorgen, welche innerhalb des Akkumulators 2 gespeichert ist.

Der Akkumulator 2 enthält im Wesentlichen ein Akku-Gehäuse 15, eine Anzahl an Energiespeicherzellen 16, eine Akku-Schnittstelle 17, eine Speichereinheit 18, einen Transceiver 19, eine Steuerungseinrichtung 20 sowie eine Vielzahl an Sensoren 30, 31, 32, 33, 34, 35.

Der Transceiver 19 kann auch als Sende- und Empfangseinrichtung von elektrischen Signalen bezeichnet werden.

Die Energiespeicherzellen 16 können auch als Akku-Zellen bezeichnet werden und sind im Inneren des Akku-Gehäuses 15 angeordnet.

Das Akku-Gehäuse 15 enthält dabei im Wesentlichen ein Deckelelement 15a, vier Seitenwände 15b und ein Bodenelement 15c.

Die Akku-Schnittstelle 17 ist an der Außenseite des Deckelelements 15a angeordnet und dient zum elektrischen bzw. elektronischen sowie mechanischen Verbinden des Akkumulators 2 mit der Werkzeugmaschine 1 oder einer Ladevorrichtung 22.

Zum elektrischen bzw. elektronischen Verbinden weist die Akku-Schnittstelle 17 einen Pluskontakt 17a, einen Minuskontakt 17b und einen Kommunikationskontakt 17c auf. Der Plus- und Minuskontakt 17a, 17b dient zur Erzeugen eines Stromkreises, wenn der Akkumulator 2 mit einer Werkzeugmaschine 1 oder einer Ladevorrichtung 22 verbunden ist. Der Kommunikationskontakt 17c dient zum Senden und Empfangen von Daten sowie Informationen in Form von elektrischen Signalen. Der Kommunikationskontakt 17c ist entsprechend mit dem Transceiver 19 verbunden.

Zu den Daten und Informationen gehören unter anderem (Ausführungs-)Befehle (auch Commands genannt) sowie Parameter und/oder Kennwerte der Werkzeugmaschine 1. Alternativ oder zusätzlich kann der Akkumulator 2 auch eine Funkkommunikation (z.B. Bluetooth) bzw. drahtlose Kommunikation enthalten.

Die Energiespeicherzellen 16 dienen zum Aufnehmen, Speichern und emeuten Abgeben elektrischer Energie. Wie in den Figuren angedeutet, sind die Energiespeicherzellen 16 in zylindrischer Form sowie auf Basis einer Lithium-Ionen-Technologie ausgestaltet. Jede Energiespeicherzelle 16 enthält an einem Ende eine Kontakteinrichtung, die zur Übertragung elektrischer Energie dient. Die einzelnen Kontakteinrichtung sind über entsprechende Leitungen mit der Steuerungseinrichtung 20 des Akkumulators 2 verbunden.

Alternativ können die Energiespeicherzellen 16 auch auf einer anderen geeigneten Technologie basieren.

Die zylindrische Form der Energiespeicherzellen 16 ist ebenfalls optional, sodass auch jede andere geeignete Form bzw. Geometrie gewählt werden kann. So ist es insbesondere auch möglich, dass die Energiespeicherzellen 16 als Pouchzellen ausgestaltet sind.

Es ist zudem auch möglich, dass der Akkumulator 2 sowohl zylindrische Energiespeicherzellen 16 als auch Pouch-Zellen enthält. Es ist insbesondere möglich, dass der Akkumulator 2 lediglich eine einzige zylindrische Energiespeicherzelle 16 und eine einzige Pouchzelle enthält.

Die Steuerungseinrichtung 20 regelt und steuert verschiedene Funktionen des Akkumulators 2. Zu den Funktion gehört unter anderen die Steuerung der Aufnahme und Abgabe von elektrischer Energie in bzw. aus den Energiespeicherzellen 16.

Darüber hinaus wird mit Hilfe der Steuerungseinrichtung 20 die Menge an elektrischer Energie gesteuert, die von den Energiespeicherzellen 16 aufgenommen oder abgegeben werden sollen. In der Speichereinheit 18 ist ein erster Regelparametersatz gespeichert, welcher eine Vielzahl an Regelparameter enthält. Die Regelparameter können auch als Regelkenngrößen oder Einstellparameter bezeichnet werden.

Des Weiteren ist die Steuerungseinrichtung 20 mit dem Transceiver 19 verbunden, sodass das Aussenden und Empfangen elektrischer Signale von und zu dem Transceiver 19 geregelt sowie gesteuert sind.

Die Speichereinheit 18 ist so mit der Steuerungseinrichtung 20 verbunden, dass die Steuerungseinrichtung 20 auf die einzelnen in der Speichereinheit 18 gespeicherten Regelparameter zugreifen kann und anhand dieser Regelparameter die Funktionen des Akkumulators 2 gesteuert bzw. geregelt werden können. Zu den Regelparametern gehören maximale Entladeströme (Stromstärkewert), maximale Ladeströme (Stromstärkewert), minimale und maximale Ladezeiten, minimale und maximale Innenwiderstände sowie minimale und maximale Kapazitätswerte (in Ah).

Zu den Regelparametern gehören darüber hinaus auch ein Vorgehen zum Reduzierung oder zur vollständigen Blockade der Energieaufnahme oder -abgabe durch die Energiespeicherzellen 16.

Die Speichereinheit 18 des Akkumulators 2 dient unter anderem auch dazu, dass sogenannte Ladezyklen und Entladezyklen des Akkumulators 2 gespeichert werden können. Mit einem Ladezyklus ist dabei eine Ladevorgang gemeint, bei dem elektrische Energie von den Energiespeicherzellen 16 aufgenommen werden. Mit einem Entladezyklus ist dabei eine Entladevorgang gemeint, bei dem elektrische Energie von den Energiespeicherzellen 16 abgegeben werden.

Zu den Informationen eines Ladezyklus gehören des Weiteren die von den Energiespeicherzellen 16 aufgenommene Energie, der Ladestrom (in Ampere), die Ladespannung (in Volt), die Kapazität (%) zu Beginn des Ladevorgangs, die Kapazität (%) bei Ende des Ladevorgangs, die Anzahl des Ladevorgangs sowie die Ladezeit.

Zu den Informationen eines Entladezyklus gehören darüber hinaus die von den Energiespeicherzellen 16 abgegebene Energie, der Entladestrom (in Ampere), die Entladespannung (in Volt), die Kapazität (%) zu Beginn des Ladevorgangs, die Kapazität (%) bei Ende des Entladevorgangs, die Anzahl des Entladevorgangs sowie die Entladezeit.

Die entsprechenden Werte werden dabei on den jeweiligen Sensoren des Akkumulators 2 erfasst.

Der Akkumulator 2 enthält des Weiteren eine Anzahl an Sensoren 30, 31, 32, 33, 34, 35 zum Erfassen von Betriebskennwerten. Die Betriebskennwerte können auch als Betriebsparameter, Betriebskenngrößen, Kennwerte, Parameter oder Betriebsgrößen bezeichnet werden.

Insbesondere enthält der Akkumulator 2 dabei einen Sensor 30 zum Erfassen einer Ladestromstärke und Entladestromstärke, einen Sensor 31 zum Erfassen einer Lade- und

Entladezeit, einen Sensor 32 zum Erfassen eines Beschleunigungswerts und Bremswertes, einen Sensor 33 zum Erfassen von Temperaturwerten, einen Sensor 34 zum Erfassen von Innenwiderstandswerten und einen Sensor 35 zum Erfassen der Kapazität. Mit Hilfe der Sensoren 30, 31, 32, 33, 34, 35 des Akkumulators 2 ist es insbesondere möglich den SoH (= State of Health) und SoC (= State of Charge) des Akkumulators 2 zu erfassen.

Der Sensor 32 zum Erfassen eines Bremswertes kann auch als Sensor zum Erfassen eines Verzögerungswertes bezeichnet werden.

Der Sensor zum Erfassen einer Lade- und Entladezeit 31 kann auch als Uhr, Echtzeituhr oder Real-Time Clock (= RTC) bezeichnet werden.

Der Beschleunigungswert kann als Wert für eine positive Beschleunigung und der Bremswert kann auch als Wert für eine negative Beschleunigung bezeichnet werden.

Der Sensor 33 zum Erfassen von Temperaturwerten kann auch als Thermometer oder Temperaturmesser bezeichnet werden.

Der Sensor 34 zum Erfassen von Innenwiderstandswerten kann auch als Ohmmeter bezeichnet werden.

Der Sensor 35 zum Erfassen der Kapazität kann auch als Sensor zum Erfassen der Amperestunden (Ah) bezeichnet werden.

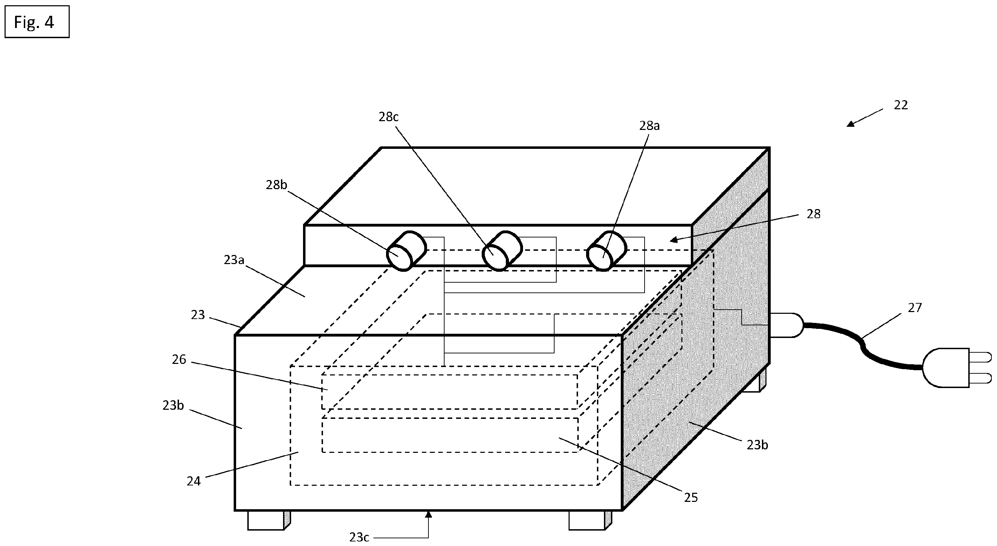

In Figur 4 ist die Ladevorrichtung 22 gezeigt, welche im Wesentlichen ein Ladergehäuse 23, eine Steuereinheit 24, eine Speichereinheit 26, eine Energieversorgung 27 und eine Sende- und Empfangseinrichtung 40 mit einem Transceiver 25 enthält.

Das Ladergehäuse 23 enthält dabei im Wesentlichen ein Deckelelement 23a, vier Seitenwände 23b und ein Bodenelement 23c.

An dem Deckelelement 23a ist eine Laderschnittstelle 28 positioniert und dient zum elektrischen bzw. elektronischen sowie mechanischen Verbinden der Ladevorrichtung 22 mit dem Akkumulator 2.

Entsprechend einer alternativen Ausführungsform können auch mehr als eine einzige Laderschnittstelle 28 an der Ladevorrichtung 22 vorhanden sein.

Zum elektrischen bzw. elektronischen Verbinden weist die Laderschnittstelle 28 einen Pluskontakt 28a, einen Minuskontakt 28b und einen Kommunikationskontakt 28c auf. Der Plus- und Minuskontakt 28a, 28b dient zur Erzeugen eines Stromkreises, wenn der Akkumulator 2 mit der Ladevorrichtung 22 verbunden ist. Der Kommunikationskontakt 28c dient zum Senden und Empfangen von Daten sowie Informationen in Form von elektrischen Signalen.

Alternativ oder zusätzlich kann die Ladevorrichtung 22 auch eine Funkkommunikation (z.B. Bluetooth) bzw. drahtlose Kommunikation enthalten.

Die Energieversorgung 27 der Ladevorrichtung 22 ist in Form eines Stromkabels zum Verbinden mit einer nicht gezeigten Netzstromquelle (d.h. Steckdose) ausgestaltet.

Im Inneren des Ladergehäuses 23 ist die Steuereinheit 24, die Sende- und Empfangseinrichtung 40 mit dem Transceiver 25 und die Speichereinheit 26 positioniert.

Die Steuereinheit 24 steuert und regelt die einzelnen Funktionen der Ladevorrichtung 22. Zu diesen Funktionen gehören unter anderen die Einstellung eines Ladestroms (d.h. der Stromstärkewert), wenn ein Akkumulator 2 zum Laden mit der Ladevorrichtung 22 wiederlösbar verbunden ist. Die Sende- und Empfangseinrichtung 40 mit dem Transceiver 25 dient zum Senden und Empfangen von Daten sowie Informationen.

Gemäß dem vorliegenden Ausführungsbeispiel ist die Sende- und Empfangseinrichtung 40 als Bestandteil einer Ladevorrichtung 22 in Form einer WiFi-Vorrichtung ausgestaltet.

Alternativ kann die Sende- und Empfangseinrichtung 40 auch in Form einer Bluetooth-Vorrichtung ausgestaltet sein.

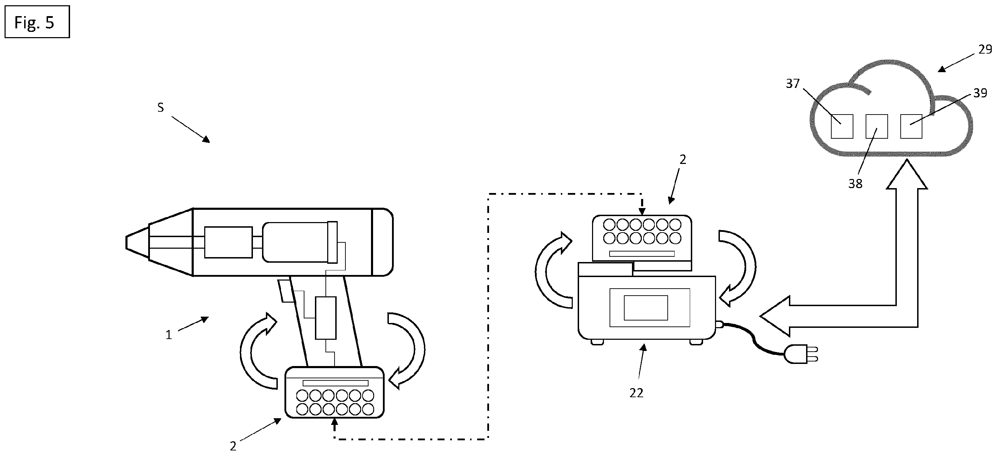

Wie in Figur 5 angedeutet ist die Ladevorrichtung 22 insbesondere dazu ausgestaltet, mit einer Datenspeicher- und Rechenvorrichtung 29 unterschiedliche Daten sowie Informationen auszutauschen. Die Datenspeicher- und Rechenvorrichtung 29 enthält dabei einen Transceiver 37, eine Recheneinheit 38 sowie eine Speichereinheit 39. Die Datenspeicher- und Rechenvorrichtung 29 kann auch als Cloud bzw. Cloud-Rechner bezeichnet werden.

Der Transceiver 37 ist dabei ausgestaltet, sodass Daten und Informationen mit dem Transceiver 25 der Ladevorrichtung 22 oder sodass Daten und Informationen mit dem Transceiver 19 des Akkumulators 2 ausgetauscht werden können.

Alternativ oder zusätzlich ist der Transceiver 37 der Sende- und Empfangseinrichtung 40 der Ladevorrichtung 22 so ausgestaltet, dass Daten und Informationen mit dem Transceiver 19 des Akkumulators 2 ausgetauscht werden können.

Des Weiteren ist auch möglich, dass der Transceiver 19 des Akkumulators 2 Daten und Informationen sowohl mit dem Transceiver 25 der Ladevorrichtung 22 als auch mit dem Transceiver 37 der Sende- und Empfangseinrichtung 40 der Ladevorrichtung 22 austauscht. Austauschen bedeutet, dass Daten und Informationen gesendet sowie empfangen werden können.

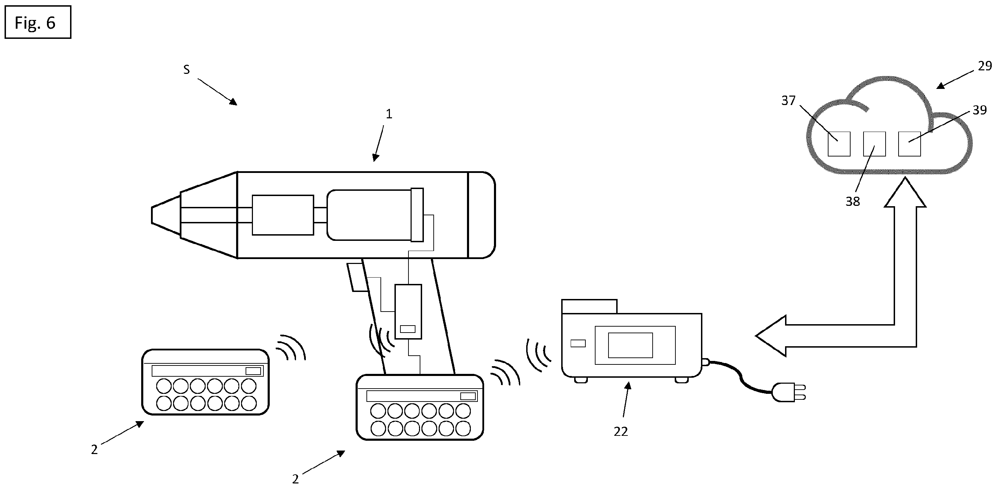

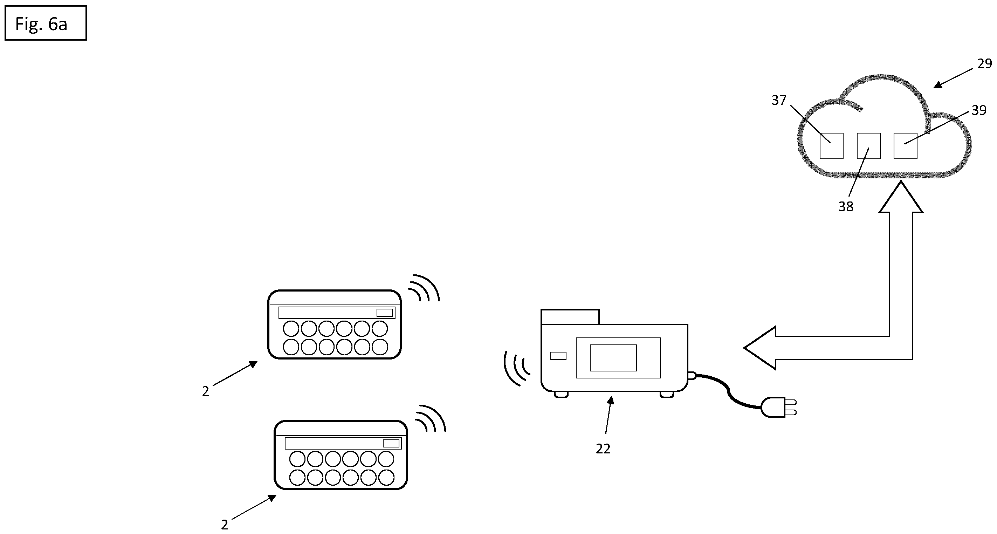

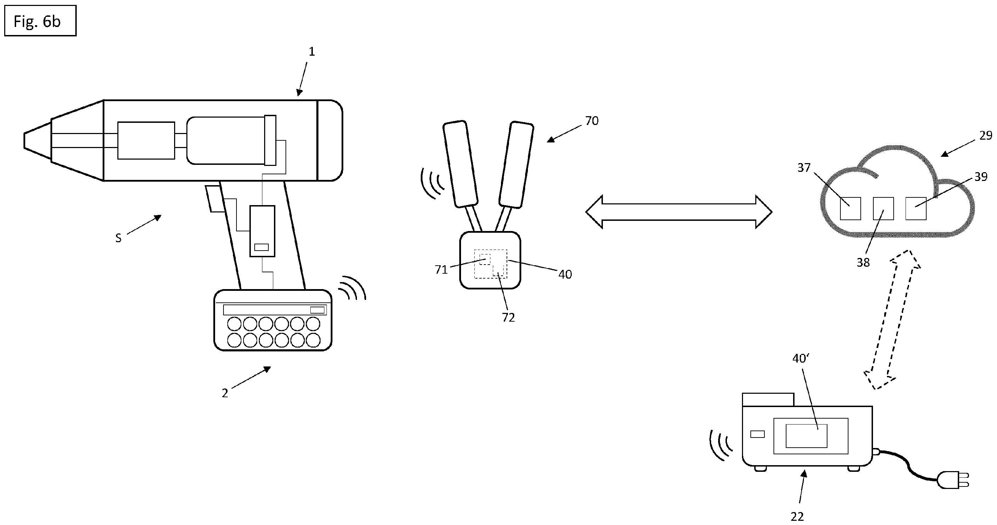

Wie in Figur 6 dargestellt ist der Akkumulator 2 mit der als Werkzeugmaschine ausgestalteten Vorrichtung 1 physisch verbunden. Durch die physische Verbindung des Akkumulators 2 mit der Werkzeugmaschine 1 kann elektrische Energie von dem Akkumulator 2 an die Verbraucher der Werkzeugmaschine 1 gelangen. Der Akkumulator 2 und insbesondere der Transceiver 19 des Akkumulators 2 ist so ausgestaltet, dass der Transceiver 19 des Akkumulators 2 unterschiedliche Daten und Informationen auch mit dem Transceiver 25 der Ladevorrichtung 22 und/oder auch mit dem Transceiver 37 der Sende- und Empfangseinrichtung 40 der Ladevorrichtung 22 austauscht, wenn der Akkumulator 2 physisch mit der Werkzeugmaschine 1 verbunden ist.

Wie ebenfalls in Figur 6 angedeutet, ist der Akkumulator 2 und insbesondere der Transceiver 19 des Akkumulators 2 sowie der Transceiver 11 der Werkzeugmaschine 1 ausgestaltet, dass der Transceiver 11 der Werkzeugmaschine 1 Daten und Informationen einer ersten Art (d.h. einen ersten Datensatz) mit einem Transceiver 19 eines ersten Akkumulators 2a sowie gleichzeitig Daten und Informationen einer zweiten Art (d.h. einen zweiten Datensatz) mit einem Transceiver 19 eines zweiten Akkumulators 2b austauscht. Gemäß dem vorliegenden Ausführungsbeispiel erfolgt der Daten- und Informationsaustausch zwischen dem Transceiver 19 des ersten Akkumulators 2a und dem Transceiver 11 der Werkzeugmaschine 1 drahtgebunden.

Des Weiteren erfolgt gemäß dem vorliegenden Ausführungsbeispiel der Daten- und Informationsaustausch zwischen dem Transceiver 19 des zweiten Akkumulators 2b und dem Transceiver 11 der Werkzeugmaschine 1 drahtlos (d.h. per Bluetooth-Verbindung).

Wie in Figur 6a dargestellt ist der Akkumulator 2 und insbesondere der Transceiver 19 des Akkumulators 2 ausgestaltet, dass der Transceiver 19 des Akkumulators 2 Daten und Informationen auch mit dem Transceiver 25 der Ladevorrichtung 22 und/oder mit dem Transceiver 37 der Sende- und Empfangseinrichtung 40 der Ladevorrichtung 22 austauscht, auch wenn der Akkumulator 2 nicht physisch mit der Ladevorrichtung 22 verbunden ist.

Wie in Figur 6a angedeutet, erfolgt in dieser Ausführung der Daten- und Informationsaustausch drahtlos (z.B. per Bluetooth). Der Akkumulator 2 ist gemäß dieser Ausführungsform nicht mit der als Werkzeugmaschine ausgestalteten Vorrichtung 1 verbunden. Mit "Verbindung" ist dabei eine drahtlose oder drahtgebundene Verbindung eine zwischen dem Akkumulator 2 und der Werkzeugmaschine 1 gemeint. Wie ebenfalls in Figur 6a angedeutet, ist die Ladevorrichtung 22 sowie die Sende- und Empfangseinrichtung der Ladevorrichtung 22 so ausgestaltet, dass Daten und Informationen gleichzeitig zwischen der Ladevorrichtung 22 und mehreren Akkumulatoren 2a, 2b ausgetauscht werden können. Dies ist auch möglich, wenn zur selben Zeit ein dritter Akkumulator 2 für einen Ladevorgang mit der Ladevorrichtung 22 physisch verbunden ist.

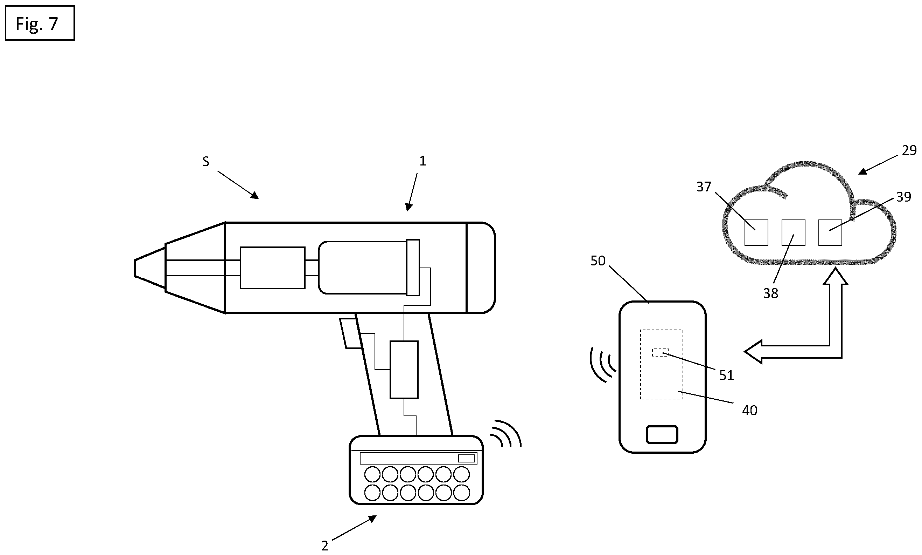

Wie in Figur 7 dargestellt, kann gemäß einem weiteren Ausführungsbeispiel die Sende- und Empfangseinrichtung 40 auch als Bestandteil eines Smartphones 50 ausgestaltet sein. Die Sende- und Empfangseinrichtung 40 enthält dabei ebenfalls einen Transceiver 51 zum drahtlosen Senden und Empfangen von Daten sowie Informationen.

Des Weiteren kann entsprechend einem weiteren Ausführungsbeispiel die Sende- und Empfangseinrichtung 40 auch als Bestandteil einer Basisstation 60 einer Übertragungseinrichtung für Funksignale ausgestaltet sein.

Darüber hinaus kann gemäß einem weiteren Ausführungsbeispiel die Sende- und Empfangseinrichtung 40 auch als Bestandteil einer Gateway-Vorrichtung 70 ausgestaltet sein.

Zur Durchführung des erfindungsgemäßen Verfahrens ist gemäß einer beispielhaften Ausführungsform der Akkumulator 2 zunächst mit der als Werkzeugmaschine ausgestalteten Vorrichtung 1 verbunden, sodass elektrische Energie von den Energiespeicherzelle 16 zu den Verbrauchern der Werkzeugmaschine 1 gelangen kann, vgl. Figur 1. Die als Werkzeugmaschine ausgestaltete Vorrichtung 1 und der Akkumulator 2 bilden hierbei ein System S.

Wie in Figur 1 gezeigt sind die jeweiligen Schnittstellen des Akkumulators 2 sowie der Werkzeugmaschine 1 wiederlösbar miteinander verbunden. Durch die Verbindung des Akkumulators 2 mit der Werkzeugmaschine 1 können auch Daten und Informationen in Form von elektrischen Signalen zwischen dem Akkumulator 2 und der Werkzeugmaschine 1 ausgetauscht werden. Zum Senden und Empfangen der elektrischen Signale dienen die jeweiligen Transceiver 19, 25 sowie die jeweils miteinander verbundenen Kommunikationskontakte 13c, 17c, des Akkumulators 2 und der Werkzeugmaschine 1.

Alternativ kann die Verbindung zwischen der Werkzeugmaschine 1 und dem Akkumulator 2 auch drahtlos (= wireless) bzw. per Funkverbindung ausgestaltet sein. Eine drahtlose Verbindung kann als Bluetooth-Verbindung ausgestaltet sein.

Wenn die Werkzeugmaschine 1 mit dem Akkumulator 2 verbunden und mit elektrischer Energie versorgt wird, erfassen die Sensoren der Werkzeugmaschine 1 unterschiedliche Daten und Informationen. Die Daten und Informationen können als Betriebskennwerte der Werkzeugmaschine 1 bezeichnet werden. Mit Hilfe des Sensors 23 zum Erfassen der Betriebszeit der Werkzeugmaschine 2 werden den erfassten Daten mit einer entsprechenden Zeitangabe versehen. Durch die Zeitangabe können beispielsweise mehrere erfasste Daten oder Datenmengen zeitlich sortiert oder bestimmten Ereignissen zugeordnet werden. Darüber hinaus werden den Daten, die von den Sensoren der Werkzeugmaschine 1 erfasst werden, eine Identifikationscodierung hinzugefügt. Die Identifikationscodierung ist spezifisch der Vorrichtung (bzw. Werkzeugmaschine) 1 zuordenbar, sodass den Daten entnehmbar ist, in welcher Vorrichtung 1 diese erfasst wurden.

Während der Verwendung des Akkumulators 2 als Energieversorgung der Werkzeugmaschine 1 erfassen auch die Sensoren des Akkumulators 2 zahlreiche Daten und Informationen in Form von verschiedenen Betriebskennwerte des Akkumulators 2. Dementsprechend wird die Zeitdauer erfasst, die der Akkumulator 2 als Energieversorgung mit der Werkzeugmaschine 1 verbunden ist. Darüber hinaus werden die Entladungsspannung, Entladungsstromstärke sowie die Identifikationscodierung der als Werkzeugmaschine ausgestalteten Vorrichtung 1 entsprechend erfasst. Durch das Erfassen der Identifikationscodierung der jeweiligen Vorrichtung wird eine Historie über die Vorrichtungen 1 dokumentiert, mit denen der Akkumulator 2 jeweils verbunden war.

Es ist dabei möglich, dass lediglich ein Teil der Sensoren Daten und Informationen erfassen.

Die von den Sensoren erfassten Betriebskennwerte werden in der Speichereinheit 18 des Akkumulators 2 gespeichert.

Wie in Figur 5 angedeutet, kann der Akkumulator 2 von der Werkzeugmaschine 1 entnommen und mit der Ladevorrichtung 22 wiederlösbar verbunden werden. Die Energiespeicherzellen 16 des Akkumulators 2 können mit Hilfe der Ladevorrichtung 22 mit elektrischer Energie geladen werden.

Die jeweiligen Schnittstellen des Akkumulators 2 sowie der Ladevorrichtung 22 sind dabei wiederlösbar miteinander so kontaktiert, dass die jeweiligen Kommunikationskontakte 17c, 28c des Akkumulators 2 und der Ladevorrichtung 22 miteinander in Kontakt stehen. Durch die Verbindung des Akkumulators 2 mit der Ladevorrichtung 22 können auch Daten und Informationen in Form von elektrischen Signalen zwischen dem Akkumulator 2 und der Ladevorrichtung 22 ausgetauscht werden. Zum Senden und Empfangen der elektrischen Signale dienen die jeweiligen Transceiver 19, 25 des Akkumulators 2 und der Ladevorrichtung 22.

Die Ladevorrichtung 22 speichert die empfangenen Betriebskennwerte in der Speichereinheit 24 der Ladevorrichtung 22.

Wenn die Ladevorrichtung 22 mit der Datenspeicher- und Rechenvorrichtung 29 verbunden ist, werden die Betriebskennwerte an die Datenspeicher- und Rechenvorrichtung 29 gesendet. Daten, die sich auf die Betriebslaufzeit bzw. Betriebszeiten beziehen, werden in der Datenspeicher- und Rechenvorrichtung 29 so gespeichert, dass sie für eine weitere Bearbeitung jederzeit zur Verfügung stehen.

In der Datenspeicher- und Rechenvorrichtung 29 sind des Weiteren Schwellwerte für die entsprechenden Betriebskennwerte hinterlegt, die von den Sensoren des Akkumulators 2 erfasst oder von der Werkzeugmaschine 1 empfangen wurden.

Ferner sind in der Datenspeicher- und Rechenvorrichtung 29 einzelne Regelparameter sowie vollständige Regelparametersätze für eine Vielzahl von unterschiedlichen Akkumulatoren 2 und Werkzeugmaschinen 1 gespeichert.

Die erfassten Betriebskennwerte werden in der Datenspeicher- und Rechenvorrichtung 29 mit den jeweiligen Schwellwerten verglichen. Wenn ein Betriebskennwert einen entsprechenden Schwellwert übersteigt, wird ein neuer Regelparameter für den Akkumulator 2 und/oder für die Werkzeugmaschine 1 von der Datenspeicher- und Rechenvorrichtung 29 an die Ladevorrichtung 22 gesendet. Der neue Regelparameter wird anschließend von der Ladevorrichtung 22 zu dem verbundenen Akkumulator 2 gesendet. In der Steuerungseinrichtung 20 des Akkumulators 2 wird der empfangene neue Regelparameter verwendet, um einen korrespondierenden Regelparameter zu ersetzen oder zu ergänzen. Dieser korrespondierende Regelparameter kann auch als bisheriger oder alter Regelparameter bezeichnet werden.

Ein neuer Regelparameter für die Werkzeugmaschine 1 kann von der Ladevorrichtung 22 auf den Akkumulator 2 übertragen und dort gespeichert werden. Wenn der Akkumulator 2 mit der Werkzeugmaschine 1 verbunden ist, wird der neue Regelparameter von dem Akkumulator 2 an die Werkzeugmaschine 1 gesendet. Der neue Regelparameter ersetzt oder ergänzt eine bestehenden Regelparameter in der Werkzeugmaschine 1.

Gemäß eines alternativen Ausführungsbeispiels kann es auch möglich sein, dass mehr als ein einziger neuer Regelparameter von der Datenspeicher- und Rechenvorrichtung 29 an die Ladevorrichtung 22 gesendet wird, wenn mehr als ein Betriebskennwert die entsprechenden Schwellwerte übersteigt. Es ist zudem auch möglich, dass bereits ein oder mehrere neue Regelparameter von der Datenspeicher- und Rechenvorrichtung 29 an die Ladevorrichtung 22 gesendet werden, wenn ein oder mehrere erfasste Betriebskennwerte entsprechende Schwellwerte noch nicht übersteigen, sondern die erfassten Betriebskennwerte lediglich diesen Schwellwerten entsprechen.

In Figur 6b ist ein System S mit einer als Werkzeugmaschine ausgestaltenden Vorrichtung 1 verbunden mit einem Akkumulator 2 gezeigt. In der Speichereinheit 18 des Akkumulators 2 sind von den Sensoren des Akkumulators 2 sowie von den Sensoren der Werkzeugmaschine 1 erfasste Daten gespeichert.

Des Weiteren befinden sich in der Nähe des Systems S eine erste Sende- und Empfangseinrichtung 40 sowie eine zweite Sende- und Empfangseinrichtung 40'. Die erste Sende- und Empfangseinrichtung 40 ist dabei in Form eines Gateway-Einrichtung 70 (auch als Gateway bekannt) und die zweite Sende- und Empfangseinrichtung 40' ist in Form einer zuvor beschriebenen Ladevorrichtung 22 ausgestaltet. Die Gateway-Einrichtung 70 enthält ein Bluetooth-Modul 71 sowie ein WiFi-Modul 72. Das Bluetooth-Modul 71 kann dabei als erster Transceiver und das WiFi-Modul 72 kann als zweiter Transceiver bezeichnet werden.

Durch das Bluetooth-Modul 71 kann die Gateway-Einrichtung 70 unterschiedliche Daten und Informationen von dem Akkumulator 2 empfangen und auch an den Akkumulator 2 senden. Mit Hilfe des WiFi-Moduls 72 können unterschiedliche Daten und Informationen an eine Datenspeicher- und Rechenvorrichtung (= Cloud) 29 gesendet und auch empfangen werden. Wie in Figur 6b dargestellt ist die erste als Gateway-Einrichtung 70 ausgestaltete Sende- und Empfangseinrichtung 40 nähe zu dem Akkumulator 2 positioniert als die zweite als Ladevorrichtung 22 ausgestaltete Sende- und Empfangseinrichtung 40'.

Dadurch, dass sich die erste Sende- und Empfangseinrichtung 40 nähe zu dem Akkumulator 2 befindet, kann der als Bluetooth-Modul 71 ausgestaltete Transceiver des Akkumulators 2 eine Verbindung zu dem als Bluetooth-Modul 71 ausgestalteten (ersten) Transceiver der ersten Sende- und Empfangseinrichtung 40 erstellen. Wenn die Verbindung zwischen dem Akkumulator 2 und der ersten Sende- und Empfangseinrichtung 40 erstellt ist, werden die in der Speichereinheit 18 gespeicherten Daten an die erste Sende- und Empfangseinrichtung 40 gesendet.

Es ist dabei auch möglich, dass lediglich einer ersten Anteil der in der Speichereinheit 18 des Akkumulators 2 gespeicherten Daten zu der ersten Sende- und Empfangseinrichtung 40 gesendet werden. Wenn sich der Akkumulator 2 räumlich von der ersten Sende- und Empfangseinrichtung 40 wegbewegt bzw. sich eine gewisse Wegstrecke zwischen dem Akkumulator 2 und der ersten Sende- und Empfangseinrichtung 40 erstreckt, kann die Verbindung zwischen Akkumulator 2 und der ersten Sende- und Empfangseinrichtung 40 unterbrochen werden. Ohne die Verbindung werden keine weiteren Daten von dem Akkumulator 2 an die erste Sende- und Empfangseinrichtung 40 mehr gesendet. Wenn sich der Akkumulator 2 der zweiten Sende- und Empfangseinrichtung 40' in ausreichendem Maße nähert, kann der als Bluetooth-Modul 71 ausgestaltete Transceiver des Akkumulators 2 eine Verbindung zu dem als Bluetooth-Modul 71 ausgestalteten Transceiver der zweiten als Ladevorrichtung 22 ausgestalteten Sende- und Empfangseinrichtung 40 erstellen. Wenn die Verbindung zwischen dem Akkumulator 2 und der zweiten Sende- und Empfangseinrichtung 40' erstellt ist, wird ein zweiter Anteil (oder gesamte Rest) der in der Speichereinheit 18 des Akkumulators 2 gespeicherten Daten an die zweite Sende- und Empfangseinrichtung 40' gesendet.

Ein ständiger Wechsel der Datenübertragung von dem Akkumulator 2 an entweder die erste oder zweite Sende- und Empfangseinrichtung 40, 40' ist zu möglich.

Des Weiteren ist es auch möglich, dass anstelle eines oder mehrerer neuer Regelparameter zum Ersetzen der korrespondierenden Regelparameter ein vollständig neuer Regelparametersatz von der Datenspeicher- und Rechenvorrichtung 29 an die Ladevorrichtung 22 und schließlich an den Akkumulator 2 oder an die Werkzeugmaschine 1 gesendet wird.

Des Weiteren ist die Steuerungseinrichtung 20 sowie der Transceiver 19 des Akkumulators 2 so ausgestaltet, dass zuvor erfasste Daten an eine Sende- und Empfangseinrichtung 40 gesendet werden sobald und solange ein Kontakt (d.h. Funkverbindung oder physischer Kontakt) zwischen dem Akkumulator 2 und dieser Sende- und Empfangseinrichtung 40 besteht. Wenn der Kontakt zwischen dem Akkumulator 2 und der Sende- und Empfangseinrichtung 40 unterbrochen wird, bevor alle Daten vollständig von dem Akkumulator 2 an die Sende- und Empfangseinrichtung 40 gesendet wurden, wird die Datenübertragung fortgesetzt sobald der Kontakt wieder besteht. Die weitere Datenübertragung muss jedoch nicht an die ursprüngliche Sende- und Empfangseinrichtung 40 geschehen. Anstelle der bisherigen Sende- und Empfangseinrichtung 40 kann die noch in dem Akkumulator 2 verbliebende Datenmenge auch an eine weitere Sende- und Empfangseinrichtung 40 gesendet werden.

Darüber hinaus sind in der Steuerungseinrichtung 20 des Akkumulators 2 Prioritäten bzw. Prioritätsdaten hinterlegt sind, die die Reihenfolge des Aussendens von erfassten Daten von dem Akkumulator 2 an eine verfügbare Sende- und Empfangseinrichtung 40 regelt. Gewisse Daten, wie beispielsweise Informationen bezüglich Betriebs- und Laufzeiten einer Werkzeugmaschine 1 oder Fehlermeldungen einer Werkzeugmaschine 1 müssen mit einer höheren Dringlichkeit (d.h. schneller und früher) über eine Sende- und Empfangseinrichtung 40 an die Datenspeicher- und Rechenvorrichtung (= Cloud) 29 gesendet werden. Andere Daten, die weniger dringend und/oder wichtig sind, können jedoch später bzw. nach dem Sende der dringenden Daten gesendet werden. Zu den weniger wichtigen Daten gehören beispielsweise Daten, die von dem Sensor zum Erfassen von Orientierungswerten der Werkzeugmaschine 1 in einem Raum erfasst wurden. Wichtige sowie dringende Daten verfügten damit über eine erste bzw. höhere Priorität und weniger wichtige sowie weniger dingende Daten verfügen über eine zweite bzw. niedrigere Priorität.

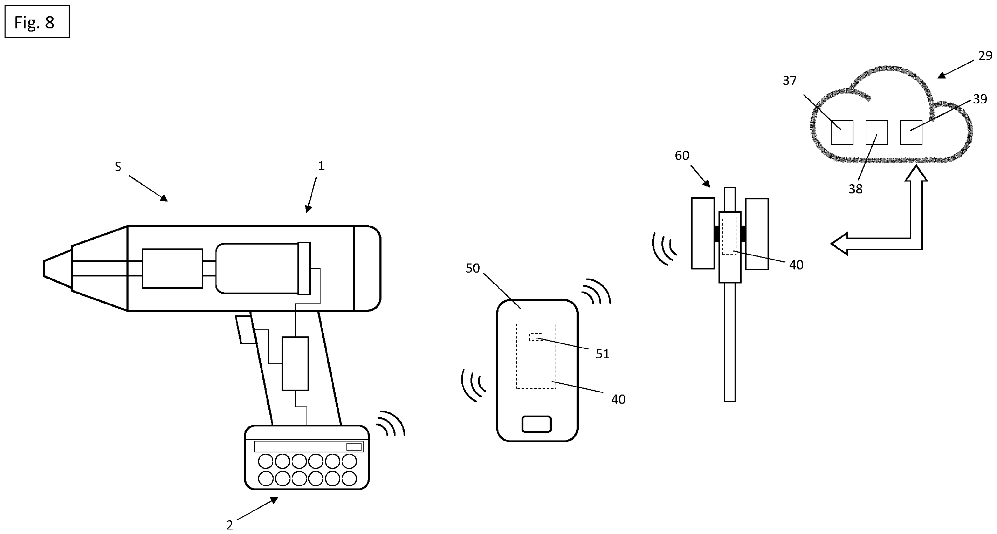

In Figur 8 ist ein System S bestehend aus einer als Werkzeugmaschine ausgestalteten Vorrichtung 1 verbunden mit einem Akkumulator 2 gezeigt. Wie angedeutet steht der Akkumulator 2 in Funkverbindung mit einer ersten als Smartphone 50 ausgestalteten Sende- und Empfangseinrichtung 40. Durch die drahtlose (Funk-)Verbindung des Akkumulators 2 mit dem Smartphone 50 können Daten und Informationen, die zuvor von Sensoren des Akkumulators 2 und/oder der Werkzeugmaschine 1 erfasst wurden, an das Smartphone 50 gesendet werden. Des Weiteren steht die erste als Smartphone 50 ausgestaltete Sende- und Empfangseinrichtung 40 in drahtloser (Funk-)Verbindung mit einer zweiten als (Mobilfunk-)Sendemast ausgestalteten Sende- und Empfangseinrichtung 40'. Die (Mobilfunk-)Sendemast kann auch als Basisstation 60 bezeichnet werden. Durch die Verbindung der ersten Sende- und Empfangseinrichtung 40 mit der zweiten Sende- und Empfangseinrichtung 40' können Daten und Informationen, die in dem Smartphone 50 zwischengespeichert sind, an die zweite Sende- und Empfangseinrichtung 40' gesendet werden. Die zweite Sende- und Empfangseinrichtung 40' sendet diese Daten und Informationen an eine Datenspeicher- und Rechenvorrichtung (= Cloud) 29.

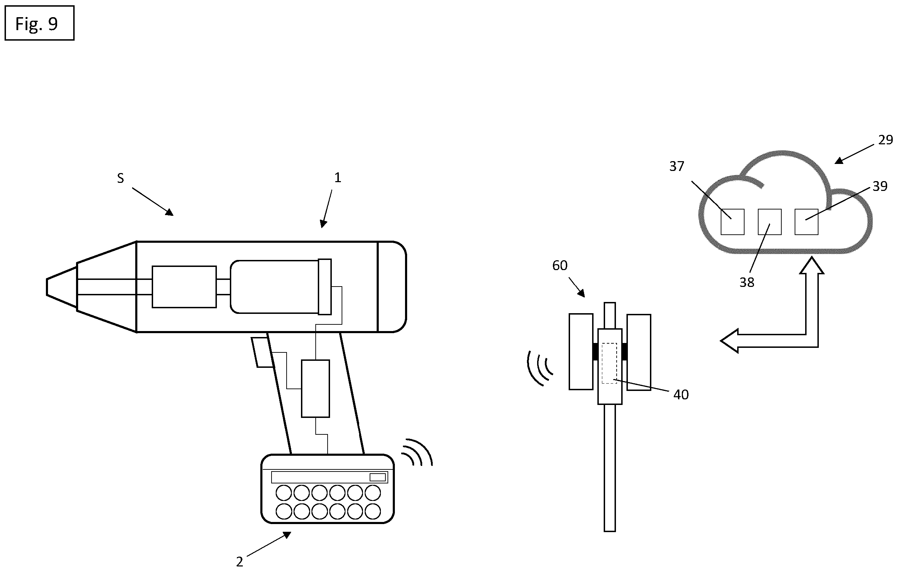

In Figur 9 ist wiederum ein System S bestehend aus einer als Werkzeugmaschine ausgestalteten Vorrichtung 1 verbunden mit einem Akkumulator 2 gezeigt. Wie angedeutet steht der Akkumulator 2 in Funkverbindung mit einer als (Mobilfunk-)Sendemast ausgestalteten Sende- und Empfangseinrichtung 40. Durch die drahtlose (Funk-)Verbindung des Akkumulators 2 mit dem (Mobilfunk-)Sendemast 60 können Daten und Informationen, die zuvor von Sensoren des Akkumulators 2 und/oder der Werkzeugmaschine 1 erfasst wurden, an dem (Mobilfunk-)Sendemast gesendet werden. Die als (Mobilfunk-)Sendemast 60 ausgestaltete Sende- und Empfangseinrichtung 40 sendet diese Daten und Informationen an eine Datenspeicher- und Rechenvorrichtung (= Cloud) 29.

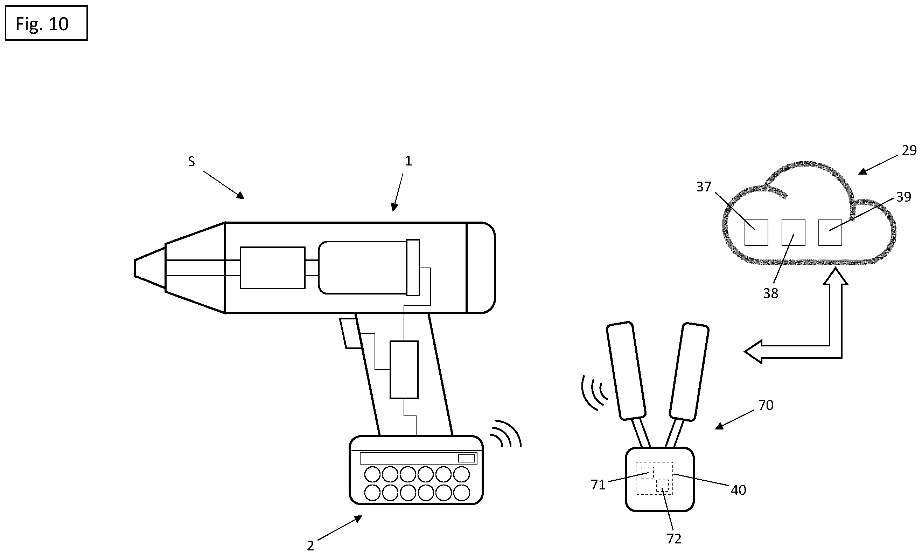

In Figur 10 ist wiederum ein System S bestehend aus einer als Werkzeugmaschine ausgestalteten Vorrichtung 1 verbunden mit einem Akkumulator 2 gezeigt. Wie angedeutet steht der Akkumulator 2 in Funkverbindung mit einer als Gateway-Vorrichtung 70 ausgestalteten Sende- und Empfangseinrichtung 40. Durch die drahtlose (Funk-)Verbindung des Akkumulators 2 mit dem (Mobilfunk-)Sendemast können Daten und Informationen, die zuvor von Sensoren des Akkumulators 2 und/oder der Werkzeugmaschine 1 erfasst wurden, an dem (Mobilfunk-)Sendemast 60 gesendet werden. Der (mit der Sende- und Empfangseinrichtung 40 ausgestaltete Mobilfunk-)Sendemast 60 sendet diese Daten und Informationen an eine Datenspeicher- und Rechenvorrichtung (= Cloud) 29.

### Bezugszeichenliste:

- 1: Vorrichtung
- 2: Akkumulator
- 3: Gehäuse
- 3a: vorderes Ende des Gehäuses
- 3b: unteres Ende des Gehäuses
- 4: Handgriff
- 5: Werkzeugaufnahme
- 6: Antrieb
- 7: Getriebevorrichtung
- 8: Abtriebswelle
- 9: Steuerungseinheit
- 10: Speichereinheit der Werkzeugmaschine
- 11: Transceiver der Werkzeugmaschine
- 12: Werkzeugmaschinenschnittstelle
- 13a: Pluskontakt der Werkzeugmaschinenschnittstelle
- 13b: Minuskontakt der Werkzeugmaschinenschnittstelle
- 13c: Kommunikationskontakt der Werkzeugmaschinenschnittstelle
- 14: Betätigungsschalter
- 15: Akku-Gehäuse
- 15a: Deckelelement
- 15b: Seitenwände
- 15c: Bodenelement
- 16: Energiespeicherzelle
- 17: Akku-Schnittstelle
- 17a: Pluskontakt der Akku-Schnittstelle
- 17b: Minuskontakt der Akku-Schnittstelle
- 17c: Kommunikationskontakt der Akku-Schnittstelle
- 18: Speichereinheit des Akkumulators
- 19: Transceiver des Akkumulators
- 20: Steuerungseinrichtung des Akkumulators
- 21a: Sensor zum Erfassen eines Stromstärkewertes
- 21b: Sensor zum Erfassen eines Spannungswertes
- 21c: Sensor zum Erfassen der Betriebszeit der Werkzeugmaschine
- 21d: Sensor zum Erfassen eines Orientierungswertes der Werkzeugmaschine
- 21e: Sensor zum Erfassen eines Temperaturwertes
- 22: Ladevorrichtung
- 23: Ladergehäuse
- 23a: Deckelelement des Ladergehäuses
- 23b: Seitenwände des Ladergehäuses
- 23c: Bodenelement des Ladergehäuses
- 24: Steuereinheit der Ladevorrichtung
- 25: Transceiver der Ladevorrichtung
- 26: Speichereinheit der Ladevorrichtung
- 27: Energieversorgung der Ladevorrichtung
- 28: Laderschnittstelle
- 28a: Pluskontakt der Laderschnittstelle
- 28b: Minuskontakt der Laderschnittstelle
- 28c: Kommunikationskontakt der Laderschnittstelle
- 29: Datenspeicher- und Rechenvorrichtung
- 30: Sensor zum Erfassen einer Ladestromstärke und Entladestromstärke
- 31: Sensor zum Erfassen einer Ladezeit
- 32: Sensor zum Erfassen eines Beschleunigungswerts und Bremswertes
- 33: Sensor zum Erfassen von Temperaturwerten
- 34: Sensor zum Erfassen von Innenwiderstandswerten
- 35: Sensor zum Erfassen der Kapazität
- 37: Transceiver der Datenspeicher- und Rechenvorrichtung
- 38: Recheneinheit der Datenspeicher- und Rechenvorrichtung
- 39: Speichereinheit der Datenspeicher- und Rechenvorrichtung
- 40: Sende- und Empfangseinrichtung
- 50: Smartphone
- 60: Basisstation einer Übertragungseinrichtung für Funksignale
- 70: Gateway-Vorrichtung
- 71: Bluetooth-Modul
- 72: WiFi-Modul
- S: System

## Patentansprüche

1. Verfahren zum Steuern und Regeln eines Systems (S) mit wenigstens einem Akkumulator (2) und einer mit dem wenigstens einen Akkumulator (2) betreibbaren Vorrichtung (1), beispielsweise eine Werkzeugmaschine, wobei der wenigstens eine Akkumulator (2) wenigstens einen Transceiver (19), wenigstens einen Sensor (30, 31, 32, 33, 34, 35) sowie eine Speichereinheit (18) und die Vorrichtung (1) wenigstens einen Sensor (21a, 21b, 21c, 21d, 21e), einen Transceiver (25) sowie eine Speichereinheit (26) enthält, **gekennzeichnet durch** die Verfahrensschritte
- Erfassen wenigstens eines Kennwertes durch den wenigstens einen Sensor (30, 31, 32, 33, 34, 35) des Akkumulators (2) und/oder durch den wenigstens einen Sensor (21a, 21b, 21c, 21d, 21e) der Vorrichtung (1);
- Senden der von dem wenigstens einen Sensor (21a, 21b, 21c, 21d, 21e) der Vorrichtung (1) erfassten Daten an den Akkumulator (2);
- Senden der erfassten Daten an eine erste Sende- und Empfangseinrichtung (40), wenn der Transceiver des Akkumulator (2) mit der ersten Sende- und Empfangseinrichtung verbunden ist, oder Senden der erfassten Daten an eine zweite Sende- und Empfangseinrichtung (40'), wenn der Transceiver des Akkumulator (2) mit der zweiten Sende- und Empfangseinrichtung (40') verbunden ist; und
- Senden der erfassten Daten von der ersten und/oder zweiten Sende- und Empfangseinrichtung (40, 40') an eine Datenspeicher- und Rechenvorrichtung.

2. Verfahren nach Anspruch 1 oder 2,
**gekennzeichnet durch** den Verfahrensschritt
- Senden wenigstens eines Datensatzes von der Datenspeicher- und Rechenvorrichtung (29) über die erste und/oder zweite Sende- und Empfangseinrichtung (40, 40') an den Akkumulator (2), wenn die empfangenen Daten wenigstens einem in der Datenspeicher- und Rechenvorrichtung (29) gespeicherten Schwellwert entsprechen.

3. Verfahren nach Anspruch 1 oder 2,
**gekennzeichnet durch** den Verfahrensschritt
- Senden des wenigstens einen Datensatzes von dem Akkumulator (2) an die Vorrichtung (1) zum Ersetzen der entsprechenden Daten, wenn die empfangenen Daten wenigstens einem in der Datenspeicher- und Rechenvorrichtung (29) gespeicherten Schwellwert entsprechen.

4. Verfahren nach Anspruch 1,
**gekennzeichnet durch** den Verfahrensschritt
- Senden wenigstens eines Datensatzes von der Datenspeicher- und Rechenvorrichtung (29) über die erste und/oder zweite Sende- und Empfangseinrichtung an den Akkumulator (2) nach Ablauf einer ersten oder zweiten Zeitdauer.

5. Verfahren nach Anspruch 1,
**gekennzeichnet durch** den Verfahrensschritt
- Markieren der erfassten Daten durch einen Zeitnachweis mittels einer Echtzeituhr.

6. Verfahren nach Anspruch 1,
**gekennzeichnet durch** den Verfahrensschritt
- Markieren der erfassten Daten durch einen Herkunftsnachweis.

7. Verfahren nach Anspruch 1,
**gekennzeichnet durch** den Verfahrensschritt
- Senden wenigstens eines ersten und zweiten Signals durch den Akkumulator (2) zum Anzeigen einer Sende- und Empfangseinrichtung (40, 40'), dass der Akkumulator (2) zum Senden von Daten an die Sende- und Empfangseinrichtung (40, 40') und/oder zum Empfangen von Daten von der Sende- und Empfangseinrichtung (40, 40') bereit ist.

8. Verfahren nach Anspruch 1 oder 2,
**gekennzeichnet durch** den Verfahrensschritt
- Speichern der erfassten Daten in einer Speichereinheit der Vorrichtung (1) vor dem Senden der erfassten Daten an den Akkumulator (2).

9. Verfahren nach wenigstens einem der vorangegangenen Ansprüche,
**gekennzeichnet durch** den Verfahrensschritt
- Speichern wenigstens eines Anteils der erfassten oder empfangenen Daten in einer Speichereinheit (18) des Akkumulators (2) vor dem Aussenden der erfassten Daten an eine Sende- und Empfangseinrichtung (40, 40').

10. Verfahren nach Anspruch 1,
**gekennzeichnet durch** den Verfahrensschritt
- Bearbeiten/Abändern wenigstens eines Anteils der erfassten oder empfangenen Daten durch den Akkumulator (2).

11. Verfahren nach wenigstens einem der vorangegangenen Ansprüche,
**gekennzeichnet durch** den Verfahrensschritt
- Senden wenigstens einer ersten Teilmenge der erfassten Daten an eine erste Sende- und Empfangseinrichtung (40) sowie Senden wenigstens einer zweiten Teilmenge der erfassten Daten an eine zweite Sende- und Empfangseinrichtung (40').

12. Verfahren nach wenigstens einem der vorangegangenen Ansprüche,
**gekennzeichnet durch** den Verfahrensschritt
- Senden wenigstens einer ersten Teilmenge der erfassten Daten von einer ersten Sende- und Empfangseinrichtung (40) an eine Datenspeicher- und Rechenvorrichtung (29) zu einem ersten Zeitpunkt sowie Senden wenigstens einer zweiten Teilmenge der erfassten Daten an eine Datenspeicher- und Rechenvorrichtung (29) zu einem zweiten Zeitpunkt.

13. Verfahren nach wenigstens einem der vorangegangenen Ansprüche,
**gekennzeichnet durch** die Verfahrensschritte
- Abgleichen der erfassten Daten mit in der Speichereinheit (18) des Akkumulators (2) hinterlegten Prioritätsdaten; und
- Aussenden einer ersten Datenmenge entsprechend einer ersten Priorität und Aussenden einer zweiten Datenmenge entsprechend einer zweiten Priorität.

14. System (S) zur Durchführung des Verfahrens nach wenigstens einem der Ansprüche 1 bis 13.

15. System (S) nach Anspruch 14,
**dadurch gekennzeichnet, dass** die erste und/oder zweite Sende- und Empfangseinrichtung (40, 40') als Bestandteil einer Ladevorrichtung (22), eines Smartphones (50), einer Gateway-Vorrichtung (70) oder einer Basisstation (60) einer Übertragungseinrichtung für Funksignale ausgestaltet ist.
